# NEUE EUROPÄISCHE PATENTSCHRIFT

(11) **EP 2 041 448 B2**
(45) Veröffentlichungstag und Bekanntmachung des Hinweises auf die Entscheidung über den Einspruch: **05.03.2014**
(45) Hinweis auf die Patenterteilung: 18.05.2011
(21) Anmeldenummer: 07765537.1
(22) Anmeldetag: 21.06.2007
(51) Int. Cl.: F16F 1/32

(54) **WELLFEDER**
ONDULAR WASHER
RONDELLE ONDULEE

(30) Priorität: 27.06.2006 DE 102006029411
(43) Veröffentlichungstag der Anmeldung: 01.04.2009
(73) Patentinhaber: Christian Bauer GmbH & Co. KG, 73642 Welzheim (DE)
(72) Erfinder: BRÜCKNER, Lothar, 71229 Leonberg (DE)
(74) Vertreter: BRP Renaud & Partner
(86) Internationale Anmeldenummer: PCT/EP2007/056193
(87) Internationale Veröffentlichungsnummer: WO 2008/000685

(56) Entgegenhaltungen:
- EP-A- 1 477 701
- WO-A-2005/005855
- DE-C1- 19 856 634
- US-A- 5 803 441

## Beschreibung

Die Erfindung betrifft eine Wellfeder nach dem Oberbegriff des Patentanspruchs 1.

Solche Wellfedern sind in verschiedenartigen Ausführungen bekannt und zwar unter anderem aus EP 1 477 701 A2 und WO 2005/005855 A1. Bei diesen bekannten Wellfedern ist in einem Anfangsbereich eines Einfederungsbereiches der Feder eine Federkennliniencharakteristik erreichbar, bei der die Federkennlinie erheblich flacher verläuft als in einem, auf den betreffenden Anfangsbereich nachfolgenden Bereich des Federweges. Erreicht wird dies durch einen Wellenverlauf, bei dem im Anfangsbereich des Einfederungsbereiches stetig oder stufenweise zunehmend mehr Wellenberge an den stirnseitigen Widerlagern der Wellfeder in dem Anlagebereich zum Eingriff gelangen, das heißt krafteinleitend wirken.

Die Erfindung beschäftigt sich mit dem Problem, durch eine geeignete Anordnung hoher und niedriger Wellen in einem kreisringförmigen, flachen Federmaterial eine Federkennlinie zu erhalten, bei der der flache Anfangs- und der folgende, steile Ast einen gradlinigen Charakter aufweisen und im Zusammenlauf einen prägnanten Knickpunkt ausbilden. Gleichzeitig sollen die hohen Wellen möglichst gleichmäßig über den Umfang der Wellfeder verteilt sein, sodass auch die Federkräfte ausgehend von den hohen Wellen über den Umfang gleichmäßig verteilt sind.

Beispielsweise kann eine Anordnung von insgesamt vier hohen und acht niederen Wellen so aussehen, dass die vier hohen Wellen über den Umfang gleichmäßig verteilt, das heißt mit jeweils 90 Winkelgrad Abstand zueinander angeordnet sind und jeweils zwei niedere Wellen dazwischen liegen. Ist hierbei die Mittellinie aller Wellen auf einer gleichen Ebene angeordnet, so verhalten sich die hohen Wellen weniger steif, als wenn sie direkt nebeneinander angeordnet wären. Die Folge ist, dass der flache Ast der Kennlinie (Anfangskennlinie) nur einen verhältnismäßig geringen Kraftaufbau zeigt und dabei noch gekrümmt ist. Ein definierter Knickpunkt ist hierbei nicht vorhanden. Ursache hierfür ist, dass in dieser Anordnung die Ausläufe der hohen Wellen sich zu Beginn der Einfederung wenig behindert deformieren können.

Anders ist die Situation, wenn vier hohe und acht niedere Wellen so angeordnet sind, dass jeweils zwei nebeneinander liegende, hohe Wellen zwischen vier niederen Wellen liegen. Zu Beginn der Einfederung, wenn nur die hohen Wellen wirksam sind, verhalten diese sich quasi so, als wenn die Feder nur hohe Wellen aufweisen würde. Die Anfangskennlinie ist geradlinig und geht über einen prägnanten Knickpunkt in den steilen Kennlinienbereich über. Nachteil dieser Anordnung ist, dass die hohen Wellen, wenn sie für die Erzielung einer vorbestimmten Federkennlinie nur in einer Anzahl von insgesamt vier eingesetzt werden können, dann nur einmal diametral gegenüberliegend angeordnet werden können. Anwendungsbedingt ist jedoch häufig eine umfangsmäßig gleichmäßige Verteilung, das heißt eine Anordnung mit umfangsmäßigen Abständen von erheblich weniger als 180° erwünscht.

Gelöst wird das erfindungsgemäße Problem bei einer gattungsgemäßen Wellfeder durch eine Ausführung nach den kennzeichnenden Merkmalen des Patentanspruchs 1.

Vorteilhafte und zweckmäßige Ausgestaltungen sind Gegenstand der Unteransprüche.

Die Erfindung beruht auf dem allgemeinen Gedanken, Wellenabschnitte mit anfänglich hoher Einfederungssteifigkeit einerseits in einer möglichst hohen Anzahl gleichmäßig über den Wellfederumfang zu verteilen und andererseits durch die anfänglich weniger steifen Bereiche derart abzustützen, dass deren anfangs jeweils hohe Federsteifigkeit über einen vorgebbaren Einfederungsweg auch tatsächlich in dem gewünschten Maße wirksam bleibt.

Nachstehend näher erläuterte Ausführungsbeispiele der Erfindung sind in der Zeichnung dargestellt.

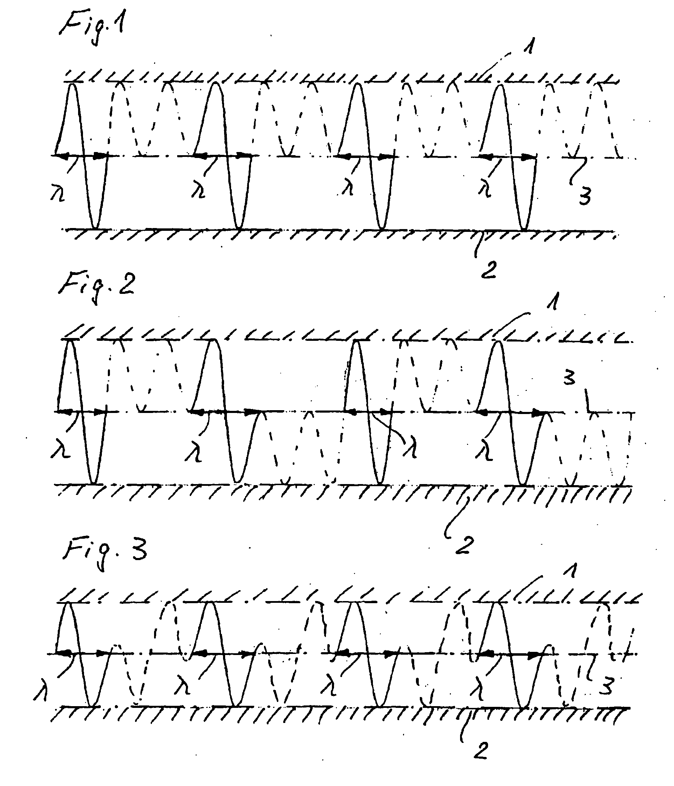

In dieser zeigen
- Fig. 1,2: jeweils eine vollständige Abwicklung über 360° verschiedener Wellenlinienverläufe einer axia- len Wellfeder,
- Fig. 3: eine nicht unter die Patentansprüche fallende Wellfeder.

In sämtlichen Figuren ist jeweils schematisch der Wellenverlauf einer zwischen einem ersten und einem zweiten Widerlager 1; 2 eingespannten Wellfeder dargestellt und zwar über den gesamten Umfang von 360°. Bei den jeweils gleichen Einspannzuständen liegt noch keine Einfederung der Wellfeder vor.

Bei allen drei dargestellten Wellenverläufen liegen über einen vollen Wellfederumfang vier erste Wellen-Abschnitte mit jeweils einem Wellenlängenbereich λ vor. In jedem der Wellenlängenbereiche λ erstreckt sich zu jeder Seite einer Mittelebene 3 ein Wellenmaximum und ein Wellenminimum, wobei diese eine vollständige Wellenlänge mit dem Maß λ bilden. Definitionsgemäß liegt ein Wellenmaximum vor, wenn der betreffende Wellenberg die Ebene des ersten Widerlagers 1 tangiert, während ein Wellenminimum vorliegt, wenn ein von der Mittelebene 3 ausgehender Wellenberg im Sinne eines Wellentales die Ebene des zweiten Widerlagers tangiert.

Bei allen Ausführungen nach den drei Figuren sind zu Beginn einer Einfederung einer Wellfeder jeweils die Wellenberge in den jeweils ersten Wellenabschnitten λ wirksam. Die zwischen den ersten Wellenabschnitten λ liegenden Wellenbereiche weisen jeweils lediglich Wellenberge mit einer Höhe auf, die unterhalb dem Abstandsmaß zwischen den beiden Widerlagern 1, 2 liegt.

Erfindungsgemäß wichtig ist bei den umfangsmäßig zwischen den ersten Wellenabschnitten liegenden Zwischenabschnitten jeweils das Vorliegen von Maxima oder Minima, die definitionsgemäß die jeweilige Ebene des ersten oder zweiten Widerlagers 1, 2 tangieren müssen. Der Verlauf dieser "niedrigen" Wellenabschnitte ist derart, dass einem Anschluss an einen ersten Wellenabschnitt jeweils ein Wellenmaximum oder Minimum folgt. Durch die zuletzt genannte Maßnahme behalten die ersten Wellenabschnitte λ während eines Anfangs-Einfederungsweges nahezu unverändert ihre Anfangssteifigkeit. Dies gilt bezüglich des gesamten, flachen, gewünschten Federkennlinienverlaufes bis zu dem möglichst in einem definierten Knickpunkt sprungartig ansteigenden steilen Kennlinienbereich.

Die erfindungsgemäße Wirkung wird dadurch erzielt, dass sich die Endbereiche des Wellenabschnittes λ jeweils über eine direkt anschließende kleine Welle gegenüber dem jeweils benachbart liegenden Widerlager 1, 2 direkt abstützen und dadurch nicht in Richtung parallel zu der Mittelebene federsteifigkeitssenkend ausweichen können.

## Patentansprüche

1. Axiale Wellfeder aus einem kreisringförmigen, flachen Federmaterial mit einer Wellenlinie mit gegenüber einer Mittelebene Maxima und Minima, wobei diese Maxima und Minima als zu unterschiedlichen Seiten der Mittelebene liegend und jeweils eine parallel zur Mittelebene verlaufende Ebene eines ersten oder zweiten Widerlagers (1, 2) tangierend definiert sind,
**gekennzeichnet durch** die Merkmale,
- die Wellenlinie setzt sich zusammen aus aufeinanderfolgenden ersten und zweiten Abschnitten, von denen mindestens jeweils zwei Abschnitte existieren,
- in den ersten Abschnitten befinden sich jeweils mindestens ein, in der Mittelebene (3) beginnender und endender Wellenlängenbereich λ mit einem Maximum und einem Minimum,
- in den zweiten Abschnitten befinden sich jeweils mindestens zwei Wellenberge mit ausschließlich Maxima oder ausschließlich Minima und unterhalb des Abstandsmaßes zwischen den Begrenzungsebenen der Widerlager (1, 2) liegenden Höhen, wobei sich an jeden angrenzenden ersten Abschnitt jeweils einer dieser Wellenberge direkt anschließt.

2. Wellfeder nach Anspruch 1,
**dadurch gekennzeichnet,**
**dass** in sämtlichen zweiten Abschnitten entweder nur Wellenberge mit Maxima oder nur Wellenberge mit Minima vorliegen.

3. Wellfeder nach Anspruch 1,
**dadurch gekennzeichnet,**
**dass** in zweiten Abschnitten jeweils von Abschnitt zu Abschnitt alternierend Wellenberge mit lediglich Maxima oder lediglich Minima ausgebildet sind.

## Claims

1. An ondular washer made from a circularly annular, flat spring material having an ondular line with maxima and minima with respect to a center plane, wherein these maxima and minima are defined as lying on different sides of the center plane and in each case being tangent to a plane of a first or second abutment (1, 2), which plane extends parallel to the center plane,
**characterized by** the features,
- the ondular line is composed of consecutive first and second sections, of which at least in each case two sections exist,
- in the first sections, there are in each case at least one ondular longitudinal region λ which begins and ends in the center plane (3) and has a maximum and a minimum,
- in the second sections, there are in each case at least two ondular peaks having exclusively maxima or exclusively minima and elevations which lie below the spacing dimension between the delimiting planes of the abutments (1, 2), wherein each adjacent first section is directly adjoined in each case by one of said ondular peaks.

2. The ondular washer according to claim 1,
**characterized in**
**that** in all second sections, either only ondular peaks with maxima or only ondular peaks with minima are present.

3. The ondular washer according to claim 1,
**characterized in**
**that** in the second sections, ondular peaks with only maxima or only minima are formed and are in each case alternating from section to section.

## Revendications

1. Ressort ondulé axial fabriqué dans un matériau à ressort circulaire plat, comprenant une ligne ondulée avec des maxima et des minima par rapport à un plan médian, sachant que ces maxima et minima sont définis en reposant sur divers côtés du plan médian et en affectant respectivement un plan d'une première ou d'une seconde butée (1, 2) parallèle au plan médian,
**caractérisé par** les attributs suivants,
- la ligne ondulée se compose de premiers et seconds tronçons l'un à la suite de l'autre, desquels au moins deux tronçons existent respectivement,
- dans les premiers tronçons se trouvent respectivement au moins une partie de longueur ondulée λ commençant et finissant dans le plan médian (3) comprenant un maximum et un minimum,
- dans les seconds tronçons se trouvent respectivement au moins deux sommets pleins avec exclusivement des maxima ou exclusivement des minima et en-dessous de l'écart entre les hauteurs reposant dans les plans de délimitation des butées (1) (2), sachant qu'un de ces sommets pleins fait suite respectivement sur chaque premier tronçon voisin.

2. Ressort ondulé axial selon la revendication 1,
**caractérisé en ce que**,
dans l'ensemble des seconds tronçons se trouvent uniquement soit des sommets pleins avec des maxima, soit des sommets pleins avec des minima.

3. Ressort ondulé axial selon la revendication 1,
**caractérisé en ce que**,
dans les seconds tronçons sont formés des sommets pleins alternant respectivement de tronçon en tronçon avec uniquement des maxima ou uniquement des minima.
